# EUROPÄISCHE PATENTANMELDUNG

(11) **EP 2 399 843 A1**
(43) Veröffentlichungstag der Anmeldung: **28.12.2011**
(21) Anmeldenummer: 11170794.9
(22) Anmeldetag: 21.06.2011
(51) Int. Cl.: B65D 67/02, B60P 7/12, B60P 7/15, B65D 19/44, B65D 71/00, B65G 1/14

(54) **Transportelement und Set zur Sicherung von Ladungsgegenständen**

(30) Priorität: 25.06.2010 DE 102010017594
(71) Anmelder: Sonoco Development, Inc., Hartsville, South Carolina 29550 (US)
(72) Erfinder: Kohl, Hans Günther, 50767 Köln (DE); Sünger, Markus, 51789 Lindlar (DE); Quick, Dieter, 51789 Lindlar (DE)
(74) Vertreter: Bauer, Dirk

(57) **Zusammenfassung**

Die Erfindung betrifft eine Transporteinheit (1), bestehend aus
- auf einer Auflagefläche (3) liegenden, zylinderförmigen Ladungsgegenständen (5), die parallel nebeneinander und in mindestens zwei Lagen (4-1, 4-2, 4-3) übereinander angeordnet sind, und
- Ladungssicherungsmitteln in Form von Zugmitteln (10, 30), mit denen die Ladungsgegenstände (5) auf der Auflagefläche (3) gegen Verrutschen und Wegrollen in eine Richtung senkrecht zu ihren Mittelachsen (6) gesichert sind, wobei

die Mittelachsen (6) übereinander befindlicher Ladungsgegenstände (5) im Wesentlichen in derselben vertikalen Ebene verlaufen, mindestens ein Zugmittel (10) zwischen zwei Lagen (4-1, 4-2, 4-3) und etwa senkrecht zu den Mittelachsen (6) der Ladungsgegenstände (5) verläuft und an beiden Enden (12, 19) des mindestens einen Zugmittels (10) jeweils ein Anschlagelement (11) angeordnet ist.

Um eine Transporteinheit der bekannten Art so weiterzuentwickeln, dass sie sich für den Transport von im Wesentlichen genau übereinander angeordneten Lagen gleicher Anzahl an Ladungsgegenständen eignet und dass eine Fixierung der Ladungsgegenstände auf einfache und flexible Weise - insbesondere im Hinblick auf verschiedene Durchmesser der Ladungsgegenstände - gewährleistet ist, ist gemäß der vorliegenden Erfindung vorgesehen, dass der Abstand zwischen den Anschlagelementen (11) veränderbar ist.

## Beschreibung

Die vorliegende Erfindung betrifft eine Transporteinheit bestehend aus
- auf einer Auflagefläche liegenden, zylinderförmigen Ladungsgegenständen, die parallel nebeneinander und in mindestens zwei Lagen übereinander angeordnet sind, wobei horizontal verlaufenden Mittelachsen jeweils einen Abstand zueinander aufweisen und Mantelflächen nebeneinander befindlicher Ladungsgegenstände in einem linienförmigen Kontakt miteinander stehen und
- Ladungssicherungsmitteln in Form von Zugmitteln, mit denen die Ladungsgegenstände auf der Auflagefläche gegen Verrutschen und Wegrollen in eine Richtung senkrecht zu ihren Mittelachsen gesichert sind, wobei
- die Mittelachsen übereinander befindlicher Ladungsgegenstände im Wesentlichen in derselben vertikalen Ebene verlaufen,
- mindestens ein Zugmittel zwischen zwei Lagen und etwa senkrecht zu den Mittelachsen der Ladungsgegenstände verläuft, wobei das mindestens eine Zugmittel von einer Außenseite eines am Rand einer Lage befindlichen Ladungsgegenstands bis zu einer Außenseite eines am gegenüberliegenden Rand befindlichen Ladungsgegenstandes reicht und
- an beiden Enden des mindestens einen Zugmittels jeweils ein Anschlagelement angeordnet ist, das sich jeweils in einem Zwickel zwischen zwei übereinander angeordneten Ladungsgegenständen befindet und sich jeweils an den Mantelflächen dieser zwei Ladungsgegenstände abstützt, so dass von den Anschlagelementen jeweils eine von den Ladungsgegenständen ausgeübte horizontal gerichtete Kraft aufnehmbar und in das Zugmittel einleitbar ist.

Darüber hinaus betrifft die Erfindung ein Set zur Sicherung von zylinderförmigen Ladungsgegenständen.

Als Auflagefläche im Sinne der vorliegenden Anmeldung werden sämtliche Flächen aufgefasst, auf denen die Lagerung der Ladungsgegenstände möglich ist. Hierunter fallen zwar auch einfache Bodenflächen einer Lagerstätte, bevorzugt sollten die Ladungsgegenstände jedoch auf Paletten jeglicher Art gelegt werden, da diese auf einfache Weise mittels Gabelstaplern verfahren werden können, auch wenn sie bereits mit den Ladungsgegenständen versehen sind.

Als zylinderförmige Ladungsgegenstände im Sinne der vorliegenden Anmeldung werden Gegenstände aufgefasst, bei denen wenigstens die Aufstandsfläche zylindrisch ausgebildet ist, also auch flaschenartige Objekte oder beispielsweise Gasbehälter. Insbesondere umfasst der Begriff zylinderförmige Ladungsgegenstände aber auch Wickel eines bahnförmigen Guts, beispielsweise von Folie oder Papier, wobei die Wickel vorzugsweise einen hülsenförmigen Wickelkern aufweisen können.

Als Außenseite eines am Rand einer Lage befindlichen Ladungsgegenstands wird die einem Außenbereich der Transporteinheit am nächsten kommende Mantelfläche eines Ladungsgegenstandes verstanden.

Dass die Mittelachsen übereinander befindlicher Ladungsgegenstände im Wesentlichen in derselben vertikalen Ebene verlaufen, bedeutet im Sinne der vorliegenden Anmeldung eine maximale Abweichung zwischen der Mittelachse eines Ladungsgegenstandes und einer vertikalen Ebene durch einen anderen Ladungsgegenstand von +/- 10 % des Durchmessers der Ladungsgegenstände.

### Stand der Technik

Aus dem Stand der Technik ist es bekannt, zylinderförmigen Ladungsgegenstände, die einen deutlich kleineren Durchmesser als ihre Länge aufweisen und somit für einen "stehenden" Transport nicht geeignet sind, horizontal liegend und meist in mehreren Lagen übereinander gestapelt zu transportieren, wobei die Anzahl der in einer Lage nebeneinander befindlichen Ladungsgegenstände von der untersten Lage zu der obersten Lage hin abnimmt. Dies liegt daran, dass die zylinderförmigen Ladungsgegenstände einer oberen Lage in den Zwickeln einer darunter befindlichen Lage angeordnet werden, so dass sie sich jeweils auf zwei Ladungsgegenständen der darunter befindlichen Lage abstützen.

Nachteil der vorbeschriebenen Transporteinheiten ist das schlechte Verhältnis von dem benötigten Transportvolumen zu dem tatsächlich genutzten Transportvolumen, also das Brutto/Netto Verhältnis, das umso ungünstiger wird, desto mehr Lagen übereinander gestapelt sind. Bei der bekannten Art der Stapelung verbleiben nämlich -abgesehen von der untersten Lage - gewisse Freiräume an den Rändern der Lagen, die ungenutzt bleiben.

Aus der DE 20 2009 000 365 U 1 ist eine gattungsgemäße Transporteinheit bekannt, bei der die übereinander angeordneten Lagen die gleiche Anzahl an Ladungsgegenständen haben, wobei die Ladungsgegenstände oberer Lagen dennoch in den Zwickeln der jeweils darunter befindlichen Lage positioniert sind, weshalb die einzelnen Lagen immer seitlich zu den benachbarten Lagen versetzt sind. Dies wird so erreicht, dass die Ladungsgegenstände jeweils einer Lage an deren Stirnseiten so über jeweils ein Zugmittel miteinander verbunden werden, dass sie quasi zu einer Scheibe verbunden sind. Zwar können Ladungsgegenstände auf die vorgenannte Weise mit einem deutlich besseren Brutto/Netto Verhältnis transportiert werden, jedoch ist die Breite der so erhaltenen Transporteinheit aufgrund der über die unterste Lage seitlich überstehende zweite (und eventuell vierte) Lage größer, so dass sich diese Transporteinheit nicht für Transportmittel mit entsprechend beschränkter Breite eignet.

Um nebeneinander angeordnete Ladungsgegenstände in mehreren genau übereinander liegenden Lagen transportieren zu können, sind aus dem Stand der Technik Paletten mit gerundeten Ausschnitten beziehungsweise konkaven Vertiefungen bekannt, die sowohl unter die erste Lage als auch zwischen zwei Lagen von Ladungsgegenständen angeordnet werden. Auch ist es beispielsweise aus der US 3 229 825 A bekannt zwischen zwei Lagen von zylindrischen Ladungsgegenständen starre Stangen mit konkav ausgebildeten Endbereichen anzuordnen.

Da jedoch für verschiedene Rollendurchmesser unterschiedlich ausgebildete Paletten beziehungsweise verschieden lang ausgebildete Stangen erforderlich sind, müssen eine Vielzahl verschiedener Paletten und Stangen vorgehalten werden, was einen großen Lagerungsbedarf zur Folge hat. Ferner ist die Anordnung der Ladungsgegenstände auf Paletten nachteilig, da die Durchmesser derselben typischerweise nicht genau in die konkaven Vertiefungen der Paletten passen, so dass die Ladungsgegenstände ein gewisses Spiel in den Vertiefungen haben und leicht schwanken können. Folglich ist eine derartig ausgebildete Transporteinheit nicht so stabil wie eine als Block ausgebildete Einheit. Schließlich ist bezüglich der vorbeschriebenen Paletten noch als nachteilig anzuführen, dass deren Positionierung zeitaufwändig ist und sie nicht ausreichend von Staub und Verschmutzungen freigemacht werden können, was insbesondere bei dem Transport hochsensibler Materialien von Nachteil ist.

### Aufgabe

Aufgabe der vorliegenden Erfindung ist es, eine Transporteinheit der bekannten Art so weiterzuentwickeln, dass sie sich für den Transport von im Wesentlichen genau übereinander angeordneten Lagen gleicher Anzahl an Ladungsgegenständen eignet und dass eine Fixierung der Ladungsgegenstände auf einfache und flexible Weise - insbesondere im Hinblick auf verschiedene Durchmesser der Ladungsgegenstände - gewährleistet ist. Hierzu soll ferner ein entsprechendes Set zur Sicherung von Ladungsgegenständen zur Verfügung gestellt werden.

### Lösung

Die vorgenannte Aufgabe wird erfindungsgemäß dadurch gelöst, dass der Abstand zwischen den Anschlagelementen veränderbar ist.

Die Geometrie des Zugmittels ist unabhängig von den verschiedenen Durchmessern der Ladungsgegenstände, so dass - im Gegensatz zu den eingangs genannten Paletten mit gerundeten Ausschnitten beziehungsweise konkaven Vertiefungen oder den starren Stangen mit konkaven Endbereichen - keine verschiedenartigen Zugmittel vorgehalten werden müssen. Die Anschlagelemente werden in Kraft übertragender Weise mit dem Zugmittel verbunden. Dabei kann der Abstand der Anschlagelemente zueinander jeweils an die individuell zusammenzustellende Transporteinheit angepasst werden, wobei der Abstand jeweils so gewählt wird, dass die Anschlagelemente jeweils an den Mantelflächen der betreffenden Ladungsgegenstände anliegen. Dabei kann eine Transporteinheit auch Ladungsgegenstände verschiedener Durchmesser umfassen.

Die auf die Ladungsgegenstände Druck ausübenden Anschlagelemente, die von dem unter Zug stehenden Zugmittel in ihrer Lage gehalten werden, drücken die Ladungsgegenstände einer Lage zusammen und verhindern ein Auseinanderrollen derselben. Besitzen die Anschlagelemente eine große Breite und stützen die Ladungsgegenstände über eine große Länge ab, so kann lediglich ein Zugmittel zwischen den Lagen vorgesehen werden, das in Längsrichtung der Ladungsgegenstände mittig angeordnet wird, da die Ladungsgegenstände von den entsprechend breit ausgebildeten Anschlagelementen ausreichend gehalten werden.

Erfindungsgemäß ist es demnach möglich eine über einer anderen Lage befindliche Lage mit nur drei Elementen, nämlich dem Zugmittel und zwei Anschlagelementen, zu fixieren, wobei die Elemente unabhängig von dem Durchmesser der Ladungsgegenstände eingesetzt werden können und somit keine verschiedenartigen Elemente zur Fixierung vorgehalten werden müssen.

Werden die Anschlagelemente mit geringerer Breite ausgebildet, sollten zumindest zwei Zugmittel mit jeweils zwei Anschlagelementen vorgesehen werden, die in Längsrichtung der Ladungsgegenstände betrachtet im Bereich der Enden der Ladungsgegenstände angeordnet sind.

Die erfindungsgemäße Art der Fixierung der Ladungsgegenstände einer Lage bietet eine äußerst einfache, flexible und schnelle Möglichkeit, eine Transporteinheit zusammenzustellen.

Vorteilhaft ist auch, dass die Höhe des Zugmittels - also die Abmessung in vertikaler Richtung - gering gewählt werden kann, so dass die Höhe der Transporteinheit nur geringfügig von der Summe der übereinander befindlichen Ladungsgegenstände abweicht, wodurch eine kompakte Transporteinheit geschaffen wird.

Erfindungsgemäß lagern die Ladungsgegenstände oberhalb des mindestens einen Zugmittels auf dem Zugmittel beziehungsweise stützen sich auf dem Zugmittel ab, so dass zwischen übereinander befindlichen Ladungsgegenständen ein Spalt verbleibt, der etwa der Höhe des Zugmittels entspricht.

Es ist von Vorteil, wenn die Anschlagelemente keilförmig ausgebildet sind und Anschlagflächen besitzen, die einen Winkel von mindestens 45°, vorzugsweise mindestens 50°, miteinander einschließen. Dabei können die Anschlagflächen als gerade Flächen ausgebildet sein oder aber aus leicht gewölbten Flächen gebildet werden.

Um eine kompakte Transporteinheit zu erhalten, ist es vorgesehen, dass die Anschlagelemente nicht über einem Außenbereich der Transporteinheit zugewandte vertikale Tangentialebenen an die randseitigen Ladungsgegenstände überstehen. Demnach wird die Breite einer Transporteinheit einzig und allein von der Breite einer Lage von Ladungsgegenständen gebildet, was hinsichtlich des benötigten Raumbedarfs der Transporteinheit vorteilhaft ist. Die Transporteinheit besitzt durch die Lage der Anschlagelemente innerhalb der Zwickel keine störenden Kanten und Vorsprünge, die zu Verletzungen des die Transporteinheit handhabenden Personals führen könnten.

Um eine besonders einfache und schnelle Befestigung der Anschlagelemente an dem Zugmittel zu erreichen, ist es gemäß einer vorteilhaften Weiterbildung der Erfindung vorgesehen, dass die Anschlagelemente jeweils mit einem Führungskanal für das Zugmittel versehen sind, wobei das Zugmittel durch Einschieben in den Führungskanal lösbar mit dem Anschlagelement verbindbar ist. Auf diese Weise ist der individuell erforderliche Abstand zwischen den Anschlagelementen einfach einstellbar. Um zu vermeiden, dass das Zugmittel nicht gänzlich durch ein Anschlagelement rutschen kann, muss das Anschlagelement entweder einen Sackkanal aufweisen oder aber das Zugmittel weist an einem Ende einen Anschlag auf.

Gemäß der Erfindung können die Zugmittel Seile, Drähte, Bänder, Balken oder Stangen sein, die flexibel oder starr ausgebildet sind.

Insbesondere ist es vorteilhaft, wenn das Zugmittel auf mindestens einer Seite mindestens abschnittsweise mit einer Zahnung versehen ist, die mit einem Wandabschnitt des Führungskanals des Anschlagelements, der als federnde Zunge ausgebildete Sperrklinke ausgebildet ist, formschlüssig in Eingriff bringbar ist. Die jeweilige Ausrichtung der Verzahnungen ist demnach derart vorgesehen, dass ein Verschieben des Zugmittels in dem Anschlagelement in eine Richtung möglich ist, nicht jedoch in die entgegen gesetzte Richtung.

Vorteilhafterweise besitzt das Zugmittel auf den Ladungsgegenständen zugewandten Längsseiten jeweils eine Nut, das heißt, das Zugmittel weist einen H-förmigen Querschnitt auf. Dabei ist es ferner vorteilhaft, wenn innerhalb der Nuten Polsterungen angeordnet sind, die jeweils den Mantelflächen der Ladungsgegenstände zugewandt sind. Auf diese Weise wird weitestgehend vermieden, dass sich im Bereich der Zugmittel aufgrund der relativ hohen punktuellen Belastung Abdrücke in den Ladungsgegenständen bilden. Die Polsterung kann beispielsweise aus Gummi oder anderen geeigneten Materialien bestehen, wobei bei einer Polsterung aus Gummi ferner der positiver Effekt auftritt, dass eine Reibung zwischen Ladungsgegenständen und Zugmittel vermieden wird und somit einem Verrutschen der Ladungsgegenstände vorgebeugt wird.

Alternativ zu der Ausbildung des Zugmittels mit H-Profil können bei einem im Querschnitt rechteckförmig ausgebildeten Zugmittel zur Vermeidung von Druckstellen auch Luftpolster neben dem Zugmittel platziert werden.

Bei einem im Querschnitt H-förmig ausgebildeten Zugmittel sollte auf den beiden Längsseiten, die keine Nut aufweisen, jeweils die Zahnung vorgesehen sein.

Es ist vorteilhaft, wenn das Zugmittel und die Anschlagelemente als Kunststoff-Spritzgussteil ausgebildet sind.

Hinsichtlich eines Sets zur Sicherung von zylinderförmigen Ladungsgegenständen wird die eingangs genannte Aufgabe dadurch gelöst, dass das Set ein Zugmittel umfasst, wobei zwei keilförmige Anschlagelemente, die in Kraft übertragender Weise mit den beiden Enden des Zugmittels verbindbar sind, wobei der Abstand zwischen den Anschlagelementen veränderbar ist.

Die in Bezug auf die Transporteinheit genannten Vorteile ergeben sich analog für das Set, insbesondere wenn das Zugmittel auf mindestens einer Seite an seinen Enden zumindest abschnittsweise eine Zahnung aufweist, die jeweils mit einem Wandabschnitt eines Führungskanals eines Anschlagelements, der als federnde Zunge ausgebildete Sperrklinke ausgebildet ist, formschlüssig in Eingriff bringbar ist.

### Ausführungsbeispiel

Die Erfindung wird nachfolgend anhand von Ausführungsbeispielen einer erfindungsgemäßen Transporteinheit, die in den Figuren dargestellt ist, näher erläutert.

Es zeigt
- Fig. 1:: eine dreidimensionale Ansicht einer erfindungsgemäßen Transporteinheit,
- Fig. 2:: eine dreidimensionale Ansicht des Zugmittels mit Anschlagelementen aus Figur 1,
- Fig. 3:: eine dreidimensionale Ansicht des Zugmittels aus Figur 2,
- Fig. 4: eine Seitenansicht des Zugmittels mit Anschlagelementen aus Figur 2,
- Fig. 5: eine Seitenansicht eines Anschlagelements aus Figur 2,
- Fig. 6: eine dreidimensionale Ansicht eines Anschlagelementes aus Figur 1,
- Fig. 7 bis 10: weitere Ansichten und Schnitte des Zugmittels mit Anschlagelementen aus Figur 2,
- Fig. 11: eine dreidimensionale Ansicht einer alternativen Transporteinheit und
- Fig. 12: eine vergrößerte Darstellung der Anschlagelemente aus Figur 11.

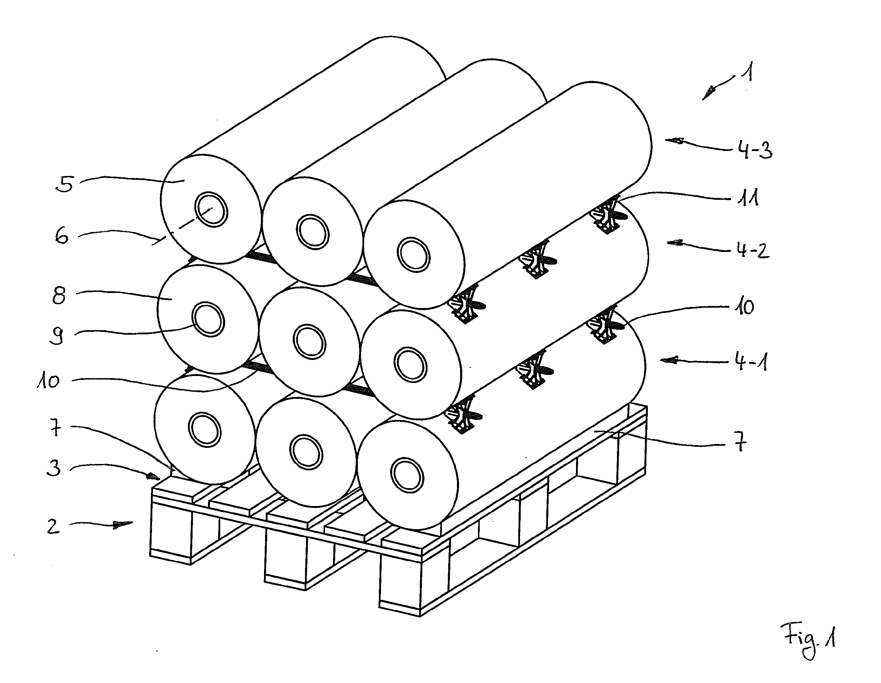

Die Figur 1 zeigt eine erfindungsgemäße Transporteinheit 1 als dreidimensionale Ansicht, umfassend eine plattenförmige Transportunterlage 2 in Form einer Palette aus Holz, die als Auflagefläche 3 für drei Lagen 4-1, 4-2, 4-3 von jeweils drei parallel zueinander angeordneten Ladungsgegenständen 5 mit horizontal verlaufenden Mittelachsen 6 dient. Zur Sicherung der untersten Lage 4-1 auf der Palette sind die beiden äußeren Ladungsgegenstände 5 jeweils mit einem lang gestreckten Keil 7 gesichert, der in etwa die gleiche Länge besitzt, wie die Ladungsgegenstände 5. Die beiden Keile 7 bestehen aus Pappe und sind auf ihrer Oberseite mit einer zu den Ladungsgegenständen 5 korrespondierenden Ausbuchtung versehen.

Bei den Ladungsgegenständen 5 handelt es sich um Wickel 8 einer bahnförmigen Folie, wobei diese auf einen hülsenförmigen Wickelkern 9 aus Pappe aufgewickelt ist. Der Durchmesser eines Wickels 8 beträgt typischerweise zwischen 30 cm und 60 cm und die Länge beträgt etwa 4,00 m.

Nebeneinander befindliche Ladungsgegenstände 5 einer Lage 4-1, 4-2, 4-3 stehen an ihren Mantelflächen in einem linienförmigen Kontakt miteinander.

Zwischen der untersten Lage 4-1 und der mittleren Lage 4-2, sowie zwischen der mittleren Lage 4-2 und der obersten Lage 4-3 sind jeweils drei Zugmittel 10 angeordnet, die senkrecht zu den Mittelachsen 6 der Ladungsgegenstände 5 verlaufen und länger sind als die Summe von drei Durchmessern eines Ladungsgegenstandes 5. Jeweils eines der Zugmittel 10 ist in Längsrichtung der Ladungsgegenstände 5 betrachtet etwa mittig angeordnet, während die beiden anderen im Bereich der Enden der Ladungsgegenstände 5 positioniert sind.

Die Ladungsgegenstände 5 der mittleren und oberen Lage 4-2, 4-3 liegen punktuell auf den horizontal verlaufenden Zugmitteln 10 auf, so dass zwischen übereinander liegenden Ladungsgegenständen 5 jeweils ein Spalt entsprechend der Höhe der Zugmittel 10 verbleibt.

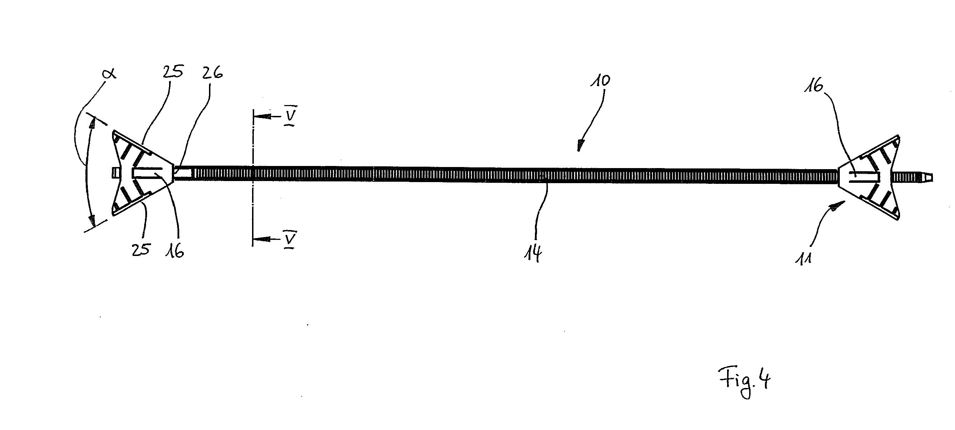

Die Zugmittel 10 sind jeweils an ihren beiden Enden mit einem Anschlagelement 11 versehen, das keilförmig ausgebildet ist und von der Seite einem gleichschenkligen Dreieck ähnelt (vgl. Figur 4). Die Anschlagelemente 11 sind jeweils so in Zwickeln zwischen zwei übereinander angeordneten Ladungsgegenständen 5 angeordnet, dass sie sich an den Mantelflächen dieser Ladungsgegenstände 5 abstützen. Dabei sind die Anschlagelemente 11 in Kraft übertragender Weise so mit den zugehörigen Zugmitteln 10 verbunden, dass die Ladungsgegenstände 5 einer Lage 4-1, 4-2, 4-3 gegeneinander gedrückt werden und ein Auseinanderrollen derselben nicht möglich ist.

Die Anschlagelemente 11 sind so dimensioniert, dass sie nicht über die äußersten Ränder der Ladungsgegenstände 5 überstehen, so dass die Breite der erfindungsgemäßen Transporteinheit 1 etwa dem dreifachen Durchmesser eines Ladungsgegenstandes 5 entspricht, wobei im Idealfall die Mittelachsen 6 jeweils übereinander angeordneter Ladungsgegenstände 5 in derselben vertikalen Ebene liegen.

Würden die Anschlagelemente deutlich breiter ausgebildet als in der Figur 1 dargestellt, wäre es auch möglich zwischen den Lagen jeweils nur ein Zugmittel mit an seinen Enden angreifenden Anschlagelementen anzuordnen.

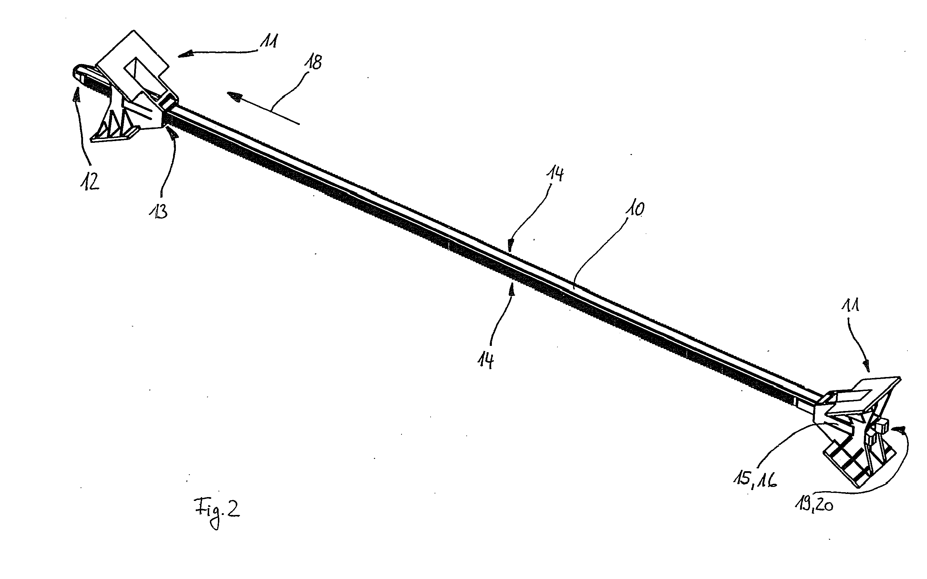

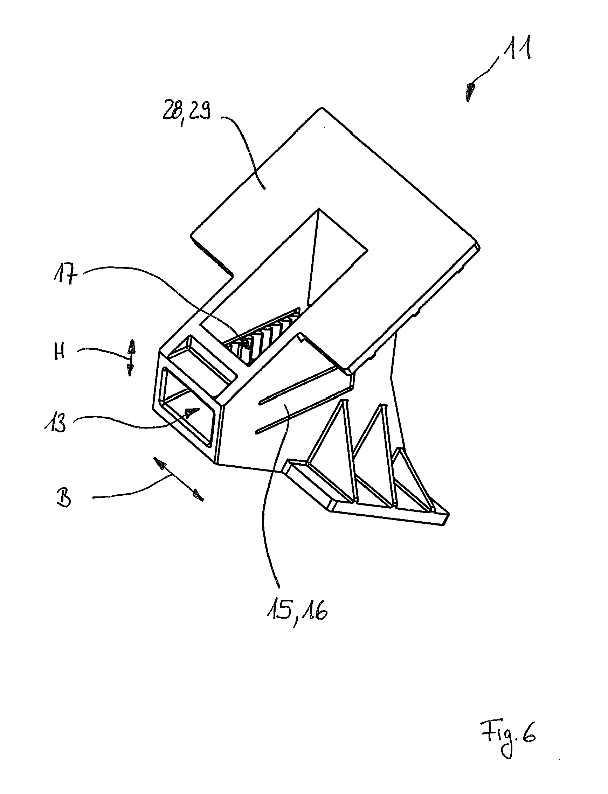

In der Figur 2 ist eine dreidimensionale Ansicht eines Zugmittels 10 mit an den beiden Enden desselben befindlichen Anschlagelementen 11 dargestellt. Es ist zu erkennen, dass das Zugmittel 10 an einem ersten Ende 12 konisch ausgebildet ist, so dass es einfach in einen Führungskanal 13 im Anschlagelement 11 eingeführt werden kann. Das Zugmittel 10 weist auf seinen beiden kurzen Längsseiten jeweils eine Zahnung 14 auf, die mit einem Wandabschnitt 15 des Führungskanals 13 des Anschlagelements 11, der als Sperrklinke in Form einer federnden Zunge 16 ausgebildet ist, formschlüssig in Eingriff bringbar ist, wobei die federnde Zunge 16 ebenfalls mit einer Zahnung 17 versehen ist (Figur 6).

Dies bedeutet, dass ein Einschieben des Zugmittels 10 in die durch einen Pfeil 18 dargestellte Richtung möglich ist, eine entgegen gesetzte Bewegung aber nicht. Derartige Verschlüsse sind zum Beispiel von so genannten Kabelbindern bekannt.

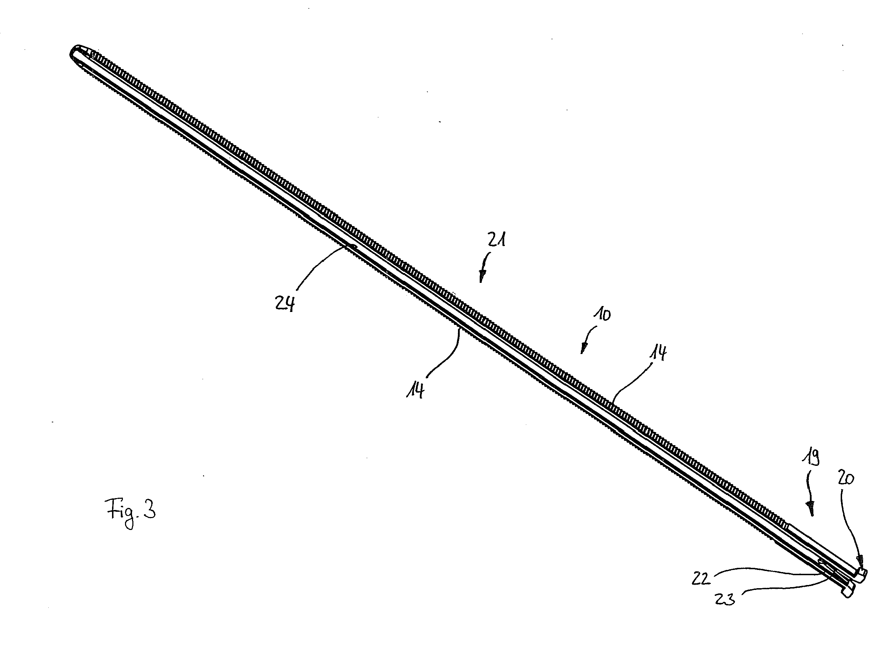

Das gegenüberliegende Ende 19 des Zugmittels 10 verfügt über einen Anschlag 20 (siehe Figur 3), der durch einen Querschnittssprung des Zugmittels 10 gebildet wird. Der Anschlag 20 gewährleistet, dass das Zugmittel 10 nicht vollständig durch die Führungskanäle 13 der Anschlagelemente 11 gleitet und somit wirkungslos wäre.

Die genaue Ausbildung des im Querschnitt rechteckigförmigen Zugmittels 10 ist der Figur 3 zu entnehmen. Das Zugmittel 10 in Form einer starren Stange 21 weist einen rechteckförmigen Querschnitt mit zwei kurzen und zwei langen Seiten auf, wobei die langen Seiten jeweils in etwa einer Breite B des Führungskanals 13 des Anschlagelements 11 entsprechen beziehungsweise diese leicht unterschreiten und die kurze Seiten jeweils in etwa einer Höhe H des Führungskanals 13 (siehe Figur 6) entsprechen beziehungsweise diese leicht unterschreiten.

Die Stange 21 ist auf einem Großteil ihrer kurzen Längsseiten mit der vorerwähnten Zahnung 14 versehen.

Ferner ist in der Figur 3 das den Anschlag 20 bildende gabelförmige Ende 19 des Zugmittels 10 gut zu erkennen. Der eigentliche Anschlag 20 wird durch einen Querschnittssprung gebildet der jedoch lediglich die breiten Seiten des Querschnitts der Stange 21 betrifft. Unterhalb des Anschlags 20 besteht die Stange 21 aus zwei parallelen Beinen 22, die parallel zu der Mittelachse der Stange 21 verlaufen und die durch einen Einschnitt 23 voneinander getrennt sind. Hierdurch entsteht der Eindruck einer zweizinkigen Gabel.

Die Ausstattung des Endes 19 des Zugmittels 10 mit dem Einschnitt 23 erlaubt es, das Ende 19 des Zugmittels 10 manuell derart zusammenzudrücken, dass der als Anschlag 20 dienende verbreiterte Querschnitt derart reduziert wird, dass das Zugmittel 10 aus den Führungskanälen 13 der Anschlagelemente 11 herausgezogen werden kann. Auf diese Weise ist die Verbindung des Zugmittels 10 mit den Anschlagelementen 11 einfach lösbar.

Die langen Seitenflächen des Zugmittels 10 weisen jeweils eine in Längsrichtung des Zugmittels 10 verlaufende Nut 24 auf, so dass die Stange 19 einen H-förmigen Querschnitt besitzt. Innerhalb der Nut 24 kann eine nicht in der Figur dargestellte Polsterung aus Moosgummi oder ähnlichem eingesetzt werden, um zum einen die Ausbildung von Abdrücken in den Ladungsgegenständen 5 zu vermeiden und zum anderen einem Verrutschen der Ladungsgegenstände 5 auf den Zugmitteln 10 entgegenzuwirken.

Die Figur 4 zeigt eine Seitenansicht des Zugmittels 10 mit den beiden Anschlagelementen 11 aus Figur 2, wobei eine kurze Seitenfläche mit der Zahnung 14 zu erkennen ist. Die Anschlagelemente 11 besitzen in der Ansicht der Figur 4 einen annähernd dreieckförmigen Aufbau mit zwei gleich langen Schenkeln 25, die einen Winkel α von 60° miteinander einschließen. Allerdings besitzen die Anschlagelemente 11 - abweichend zu einem Dreieck - eine abgeschnittene Spitze 26, wobei die Höhe der abgeschnittenen Spitze 26 geringfügig größer ist als die Breite der kurzen Seitenfläche des Zugmittels 10.

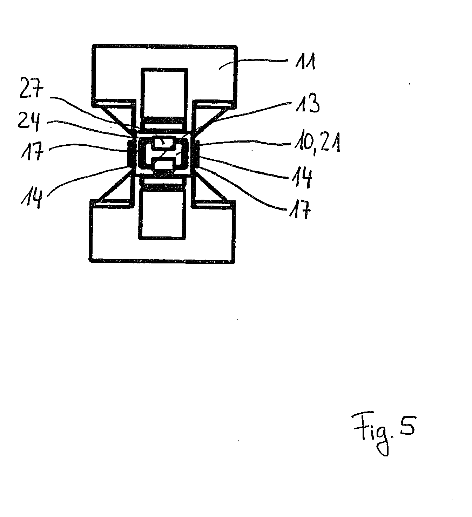

Aus der Figur 5 geht eine Ansicht entsprechend des Schnitts V-V in der Figur 4 auf das Anschlagelement 11 mit dem darin durchgeführten Zugmittel 10 hervor. Es ist gut zu erkennen, dass das als Stange 21 ausgebildete Zugmittel 10 einen H-förmigen Querschnitt besitzt. Ferner sind die in gewisser Weise ineinander greifenden Zahnungen 14, 17 von Zugmittel 11 und federnder Zunge 16 zu sehen.

In den beiden Nuten 24 des Zugmittels 10 ist jeweils eine Polsterung 27 in Form einer Moosgummileiste angeordnet.

In der Figur 6, die eine dreidimensionale Ansicht des Anschlagelements 11 zeigt, ist der Führungskanal 13 sowie eine der beiden Zahnungen 17 der federnden Zungen 16 deutlich sichtbar. Die beiden gleich langen Seitenflächen 28 des Anschlagselements 11 bilden jeweils eine Anlagefläche 29 des Anschlagelements 11 an die Mantelflächen zweier übereinander angeordneter Ladungsgegenstände 5.

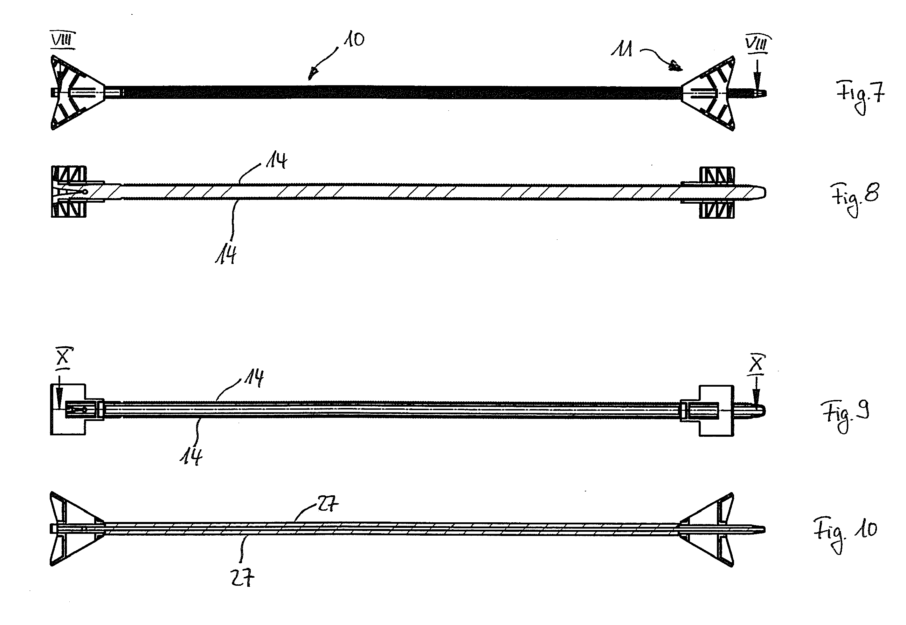

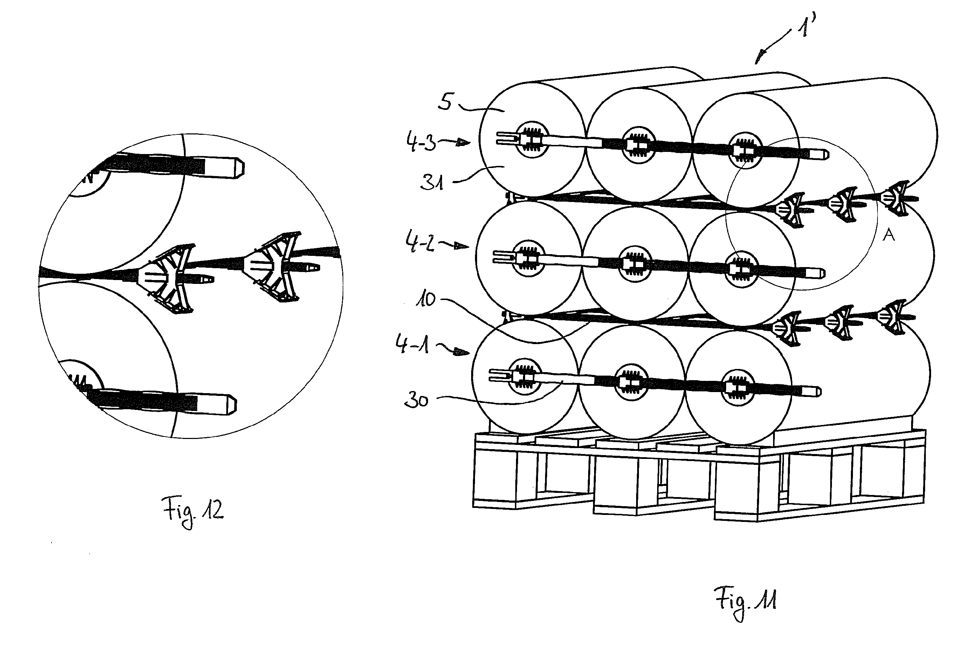

Die Figuren 7 bis 10 zeigen weitere Ansichten beziehungsweise Schnitte des Zugmittels 10 mit den Anschlagelementen 11 aus Figur 2. Dabei sind in den Figuren 8 und 9 die Zahnungen 14 des Zugmittels 10 und in der Figur 10 die beiden Polsterungen 27 zu erkennen. Die Figur 11 zeigt eine alternative Transporteinheit 1', die sich von der in der Figur 11 dargestellten Transporteinheit 1 darin unterscheidet, dass sie neben den vorbeschriebenen Zugmitteln 10 weitere Zugmittel 30 umfasst, die analog zu der DE 20 2009 000 365 U 1 jeweils an den Stirnseiten 31 der Ladungsgegenstände 5 angreifen und die Ladungsgegenstände 5 jeweils einer Lage 4-1, 4-2, 4-3 verbinden.

Eine vergrößerte Darstellung der an den Mantelflächen zweier übereinander angeordneter Ladungsgegenstände 5 anliegender Anschlagelemente 11 aus Figur 11 geht aus der Figur 12 hervor. Insbesondere ist in der Figur 12 gut zu erkennen, dass zwischen den übereinander angeordneten Ladungsgegenständen 5 ein Spalt entsprechend der Höhe der Zugmittel 10 verbleibt. Auch wird deutlich, dass die Anschlagelemente 11 mit Ihren Anschlagflächen 29 an den Mantelflächen der zugehörigen Ladungsgegenstände 5 anliegen.

### Bezugszeichenliste:

- 1: Transporteinheit
- 2: plattenförmige Transportunterlage
- 3: Auflagefläche
- 4-1, 4-2, 4-3: Lage
- 5: Ladungsgegenstand
- 6: Mittelachse
- 7: Keil
- 8: Wicke
- 9: Wickelkern
- 10: Zugmittel
- 11: Anschlagelement
- 12: erstes Ende
- 13: Führungskanal
- 14: Zahnung (an Zugmittel)
- 15: Wandabschnitt
- 16: federnde Zunge
- 17: Zahnung (im Führungskanal)
- 18: Pfeil
- 19: (zweites) Ende
- 20: Anschlag
- 21: Stange
- 22: Bein
- 23: Einschnitt
- 24: Nut
- 25: Schenkel
- 26: Spitze
- 27: Polsterung
- 28: Seitenfläche
- 29: Anschlagfläche
- 30: Zugmittel
- 31: Stirnseite

- B: Breite
- H: Höhe
- α: Winkel

## Patentansprüche

1. Transporteinheit (1, 1'), bestehend aus
- auf einer Auflagefläche (3) liegenden, zylinderförmigen Ladungsgegenständen (5), die parallel nebeneinander und in mindestens zwei Lagen (4-1, 4-2, 4-3) übereinander angeordnet sind, wobei horizontal verlaufende Mittelachsen (6) der Ladungsgegenstände (5) jeweils einen Abstand zueinander aufweisen und Mantelflächen nebeneinander befindlicher Ladungsgegenstände (5) in einem linienförmigen Kontakt miteinander stehen und
- Ladungssicherungsmitteln in Form von Zugmitteln (10, 30), mit denen die Ladungsgegenstände (5) auf der Auflagefläche (3) gegen Verrutschen und Wegrollen in eine Richtung senkrecht zu ihren Mittelachsen (6) gesichert sind, wobei
- die Mittelachsen (6) übereinander befindlicher Ladungsgegenstände (5) im Wesentlichen in derselben vertikalen Ebene verlaufen,
- mindestens ein Zugmittel (10) zwischen zwei Lagen (4-1, 4-2, 4-3) und etwa senkrecht zu den Mittelachsen (6) der Ladungsgegenstände (5) verläuft, wobei das mindestens eine Zugmittel (10) von einer Außenseite eines am Rand einer Lage (4-1,4-2,4-3) befindlichen Ladungsgegenstands (5) bis zu einer Außenseite eines am gegenüberliegenden Rand befindlichen Ladungsgegenstandes (5) reicht und
- an beiden Enden (12, 19) des mindestens einen Zugmittels (10) jeweils ein Anschlagelement (11) angeordnet ist, das sich jeweils in einem Zwickel zwischen zwei übereinander angeordneten Ladungsgegenständen (5) befindet und sich jeweils an den Mantelflächen dieser zwei Ladungsgegenstände (5) abstützt, so dass von den Anschlagelementen (11) jeweils eine von den Ladungsgegenständen (5) ausgeübte horizontal gerichtete Kraft aufnehmbar und in das Zugmittel (10) einleitbar ist,
**dadurch gekennzeichnet, dass** der Abstand zwischen den Anschlagelementen (11) veränderbar ist.

2. Transporteinheit nach Anspruch 1, **dadurch gekennzeichnet, dass** die Ladungsgegenstände (5) oberhalb des mindestens einen Zugmittels (10) auf dem Zugmittel (10) lagern, so dass zwischen übereinander befindlichen Ladungsgegenständen (5) ein Spalt verbleibt.

3. Transporteinheit nach Anspruch 1 oder 2, **dadurch gekennzeichnet, dass** die Anschlagelemente (11) keilförmig ausgebildet sind und Anschlagflächen (29) besitzen, die einen Winkel von mindestens 45°, vorzugsweise mindestens 50°, miteinander einschließen.

4. Transporteinheit nach einem der Ansprüche 1 bis 3, **dadurch gekennzeichnet, dass** die Anschlagelemente (11) nicht über einem Außenbereich der Transporteinheit (1, 1') zugewandte vertikale Tangentialebenen an die randseitigen Ladungsgegenstände (5) überstehen.

5. Transporteinheit nach einem der Ansprüche 1 bis 4, **dadurch gekennzeichnet, dass** die Anschlagelemente (11) jeweils mit einem Führungskanal (13) für das Zugmittel (10) versehen sind, wobei das Zugmittel (10) durch Einschieben in den Führungskanal (13) lösbar mit dem Anschlagelement (11) verbindbar ist.

6. Transporteinheit nach einem der Ansprüche 1 bis 5, **dadurch gekennzeichnet, dass** die Zugmittel (10) Seile, Drähte, Bänder, Balken oder Stangen (19) sind und flexibel oder starr ausgebildet sind.

7. Transporteinheit nach Anspruch 5 oder 6, **dadurch gekennzeichnet, dass** das Zugmittel (10) auf mindestens einer Seite mindestens abschnittsweise mit einer Zahnung (14) versehen ist, die mit einem Wandabschnitt (15) des Führungskanals (13) des Anschlagelements (11), der als federnde Zunge (16) ausgebildete Sperrklinke ausgebildet ist, formschlüssig in Eingriff bringbar ist.

8. Transporteinheit nach einem der Ansprüche 1 bis 7, **dadurch gekennzeichnet, dass** das Zugmittel (10) auf den Ladungsgegenständen (5) zugewandten Längsseiten jeweils eine Nut (24) besitzt.

9. Transporteinheit nach Anspruch 8, **dadurch gekennzeichnet, dass** innerhalb der Nuten (24) Polsterungen (27) angeordnet sind, die jeweils den Mantelflächen der Ladungsgegenstände (5) zugewandt sind.

10. Transporteinheit nach Anspruch 8 oder 9, **dadurch gekennzeichnet, dass** das Zugmittel (10) auf den beiden Längsseiten, die keine Nut (24) aufweisen, jeweils mit der Zahnung (14) versehen sind.

11. Set zur Sicherung von zylinderförmigen Ladungsgegenständen (5) umfassend ein Zugmittel (10), **gekennzeichnet durch** zwei keilförmige Anschlagelemente (11), die in Kraft übertragender Weise mit den beiden Enden des Zugmittels (10) verbindbar sind, wobei der Abstand zwischen den Anschlagelementen (11) veränderbar ist.

12. Set nach Anspruch 11, **dadurch gekennzeichnet, dass** das Zugmittel (10) auf mindestens einer Seite an seinen Enden zumindest abschnittsweise eine Zahnung (14) aufweist, die jeweils mit einem Wandabschnitt eines Führungskanals (13) eines Anschlagelements (11), der als federnde Zunge (16) ausgebildete Sperrklinke ausgebildet ist, formschlüssig in Eingriff bringbar ist.
